# EUROPEAN PATENT APPLICATION

(11) **EP 4 718 410 A1**
(43) Date of publication of application: **01.04.2026**
(21) Application number: 25201619.1
(22) Date of filing: 11.09.2025
(51) Int. Cl.: G07D 7/128, G07D 7/005, H04N 1/387, G07D 7/12, G07D 7/20, G07D 7/121, H04N 1/393, H04N 1/44

(54) **IMAGE PROCESSOR, IMAGE READING DEVICE, IMAGE FORMING APPARATUS, MEDICAL INFORMATION MANAGEMENT SYSTEM, IMAGE PROCESSING METHOD, AND CARRIER MEDIUM FOR DETECTION AND NOTIFICATION OF THE AUTHENTICITY OF A DOCUMENT**

(30) Priority: 25.09.2024 JP 2024166000
(71) Applicant: Ricoh Company, Ltd., Tokyo 143-8555 (JP)
(72) Inventor: HASHIMOTO, Ayumu, Kanagawa, 220-0011 (JP); OYAMA, Tadaaki, Kanagawa, 220-0011 (JP); NAKAMURA, Shogo, Kanagawa, 220-0011 (JP); ISHIKURA, Kazuki, Kanagawa, 220-0011 (JP)
(74) Representative: SSM Sandmair

(57) **Abstract**

An image processor (340) includes a determination unit (343) to determine authenticity of a document based on a document image obtained by reading the document, to generate a determination result of authenticity of the document, and an image generation unit (344) to generate an output image including the document image and a determination image indicating the determination result such that the determination image is arranged outside the document image.

## Description

### BACKGROUND

### Technical Field

The present disclosure relates to an image processor, an image reading device, an image forming apparatus, a medical information management system, an image processing method, and a carrier medium.

### Background Art

There is a related art technique for reading a document, such as an identification card or a public certificate, with an image reading device and determining the authenticity of the document based on the read document image.

In Japanese Unexamined Patent Application Publication No. 2020-28102, an image is obtained by overlaying a determination result of authenticity on the margin of a document image to provide the document image and the determination result collectively.

In the related art, the appearance of the entire document including the margin is not held. When the document image including the determination result is checked, it is not known whether the determination result is originally included in the original document or added later. Thus, the determination result of the authenticity of the document is not provided together with the document image representing the entire document including the margin.

### SUMMARY

The present disclosure described herein provides an image processor includes a determination unit to determine authenticity of a document based on a document image obtained by reading the document, to generate a determination result of authenticity of the document, and an image generation unit to generate an output image including the document image and a determination image indicating the determination result such that the determination image is arranged outside the document image.

The present disclosure described herein provides an image reading device to read a document. The image reading device including a scanner configured to read a document, and the image processor described above.

The present disclosure described herein provides an image forming apparatus that includes an image reading device to read a document, the image processor described above, and an image forming device to form an image on a medium based on the document image read by the image reading device.

The present disclosure described herein provides a medical information management system that includes an image reading device to read a document, the image processor described above, and a server to convert the document image obtained by reading the document including medical information by the image reading device into data, and store the document image.

The present disclosure described herein provides an image processing method executed by an image processor. The method includes determining authenticity of a document based on a document image obtained by reading the document, generating a determination result of authenticity of the document, and generating an output image including the document image and a determination image indicating the determination result such that the determination image is arranged outside the document image.

The present disclosure described herein provides a carrier medium carrying computer readable codes which, when executed by a computer system, cause the computer system to carry out the method described above.

According to one aspect of the present disclosure, there is an advantageous effect that the document image having the same appearance as the document and the determination result of the authenticity of the document can be provided collectively.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a side view illustrating an overview of an image reading device according to a first embodiment;
FIG. 2 is a block diagram illustrating an example of a configuration of the image reading device according to the first embodiment;
FIG. 3 is a diagram illustrating an example of a functional configuration of a processing unit according to the first embodiment;
FIGS. 4A and 4B are views illustrating examples of a document and an output image according to the first embodiment;
FIGS. 5A and 5B are views illustrating other examples of the document and the output image according to the first embodiment;
FIG. 6 is a view illustrating other examples of the document and the output image according to the first embodiment;
FIG. 7 is a flowchart presenting an example of a processing procedure according to the first embodiment;
FIG. 8 is a block diagram illustrating an example of a configuration of an image reading device according to a second embodiment;
FIG. 9 is a diagram illustrating an example of a functional configuration of a processing unit according to the second embodiment;
FIG. 10 is a view illustrating examples of a document and an output image according to the second embodiment;
FIG. 11 is a view illustrating other examples of the document and the output image according to the second embodiment;
FIG. 12 is a view illustrating other examples of the document and the output image according to the second embodiment;
FIG. 13 is a view illustrating other examples of the document and the output image according to the second embodiment;
FIG. 14 is a view illustrating other examples of the document and the output image according to the second embodiment;
FIG. 15 is a diagram illustrating an example of a functional configuration of a processing unit according to a third embodiment;
FIG. 16 is a view illustrating an example of a display screen caused to be displayed by a display unit;
FIG. 17A is a view illustrating an example of an image for selecting a size of character;
FIG. 17B is a table presenting an example of a reduction ratio to be used for size adjustment;
FIG. 18 is a view illustrating another example of the display screen caused to be displayed by the display unit;
FIGS. 19A and 19B are views illustrating an example of an image for selecting a type of document, and an example of a document type image;
FIG. 20 is a flowchart presenting an example of a processing procedure according to the third embodiment;
FIG. 21 is a diagram illustrating an example of a functional configuration of a determination unit according to a fourth embodiment;
FIG. 22 is a view illustrating an example of an output image according to the fourth embodiment;
FIG. 23 is a flowchart presenting an example of a determination process according to the fourth embodiment;
FIG. 24 is a cross-sectional view schematically illustrating an example of a configuration of a mechanical section of an image forming apparatus according to a fifth embodiment;
FIG. 25 is a view illustrating examples of a document and a print output according to the fifth embodiment;
FIG. 26 is a diagram illustrating an example of conversion of medical information into data performed by a medical information management system according to a sixth embodiment;
FIG. 27 is a flowchart of an authenticity determination process; and
FIG. 28A to 28D are diagrams each illustrating image data used in the authenticity determination process of FIG. 27.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, an image processor, an image reading device, an image forming apparatus, a medical information management system, an image processing method, and a program according to embodiments of the present disclosure are described below. As used herein, the singular forms "a," "an," and "the" are intended to include the plural forms as well, unless the context clearly indicates otherwise.

### First Embodiment

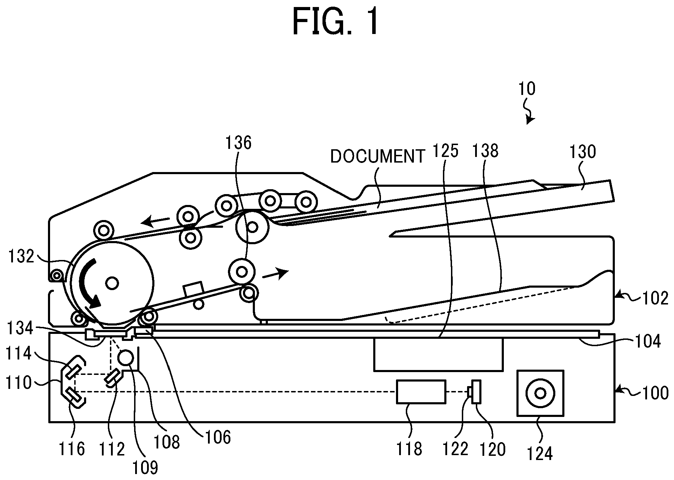

FIG. 1 is a side view of an image reading device 10 according to a first embodiment. The image reading device 10 is, for example, a sheet-through image reading device. The image reading device 10 includes a reading unit body 100 (e.g., a flatbed scanner) and an automatic document feeder (ADF) 102.

The reading unit body 100 includes a contact glass 104, a reference white plate 106, a first carriage 108, a second carriage 110, a lens 118, a photodetector array 122 mounted on a photodetector substrate 120, a scanner motor 124, and an operation panel 125. The first carriage 108 includes a light source 109 and a mirror 112. The second carriage 110 includes mirrors 114 and 116. The reading unit body 100 includes a reading window 134 through which a document conveyed by the ADF 102 is read.

The ADF 102 is mounted on the upper portion of the reading unit body 100, and automatically feeds and conveys a document. The ADF 102 includes a document tray 130, a conveyor drum 132, a sheet ejection roller 136, and a sheet ejection tray 138. The ADF 102 conveys the document placed on the document tray 130 toward the conveyor drum 132, and the conveyor drum 132 conveys the document toward the reading window 134. The document is exposed to light from the light source 109 as the document passes over the reading window 134. The light reflected from the document is successively reflected by the mirror 112 of the first carriage 108 and the mirrors 114 and 116 of the second carriage 110, and then passes through the lens 118 to form a reduced image on the light-receiving surface of the photodetector array 122 on the photodetector substrate 120.

In flatbed reading, where a document is fixed on the contact glass 104 and scanned by the first carriage 108 and the second carriage 110, light from the light source 109 illuminates the document on the contact glass 104 from below the contact glass 104. The first carriage 108 and the second carriage 110 may be collectively referred to as the carriage. The light reflected from the document is successively reflected by the mirror 112 of the first carriage 108 and the mirrors 114 and 116 of the second carriage 110, and then passes through the lens 118 to form a reduced image on the light-receiving surface of the photodetector array 122 on the photodetector substrate 120. During this process, the image reading device 10 reads the entire document by moving the first carriage 108 at a speed of V in a sub-scanning direction of the document, while moving the second carriage 110 in coordination with the first carriage 108 at a speed of 1/2V, which is half of the speed V.

The operation panel 125 includes a touch screen that displays, for example, a set value of the image reading device 10 and a determination result of the authenticity of a document (described later), and receives, for example, an input from the user and an instruction to start image reading. The touch screen receives a touch input from the user. The user can perform operations such as inputting numerical values to an input box displayed on the screen, selecting an item from a pull-down menu, and turning on and off a check box, using, for example, a finger or a pen. The operation panel 125 may include input means such as a numeric keypad, a trackball, or a touch pad.

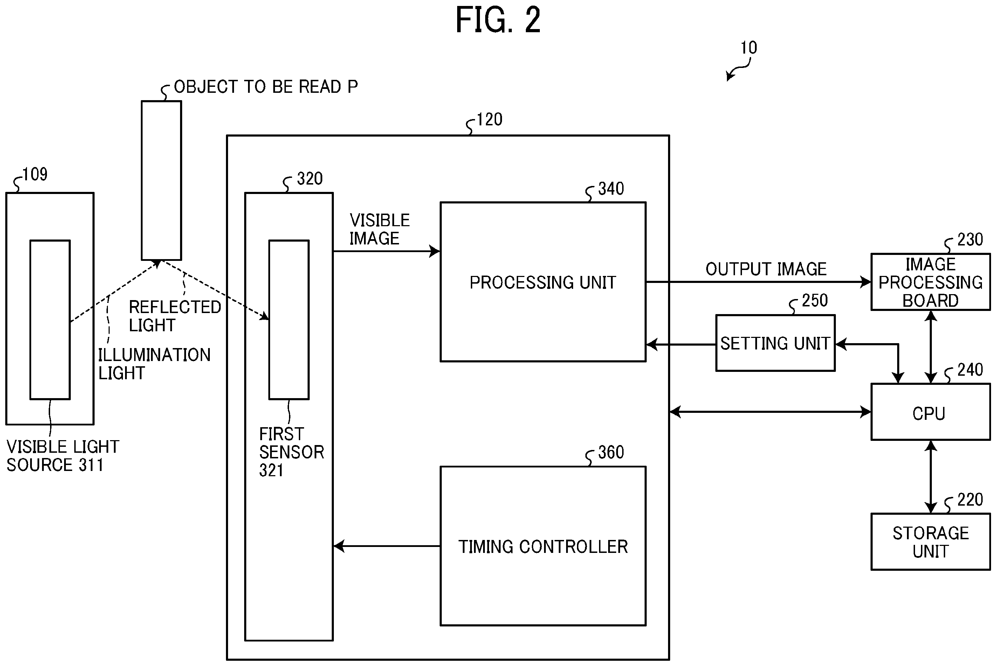

The following describes in detail a configuration of the image reading device 10. FIG. 2 is a block diagram illustrating the configuration of the image reading device 10 according to the first embodiment. The image reading device 10 includes the light source 109, the photodetector substrate 120, a storage unit 220, an image processing board 230, a central processing unit (CPU) 240, and a setting unit 250.

The light source 109 is, for example, a light emitting diode (LED) array and includes a visible light source 311. The light source 109 illuminates an object P to be read, such as a document, with light and light reflected from the object P is imaged onto a sensor 320 of the photodetector substrate 120 by an optical system including the mirrors 112, 114, and 116, and the lens 118 described above.

The photodetector substrate 120 photoelectrically converts the reflected light that has been imaged into image data, and outputs the image data. The storage unit 220 is implemented by elements such as a hard disk drive (HDD) and a memory, and stores various types of data.

The image processing board 230 performs various types of image processing on the output image data.

The CPU 240 controls the respective components of the image reading device 10.

The setting unit 250 sets a size of a document and a size of an output image to be generated by a processing circuit 340 (described later). The setting unit 250 sets these sizes in accordance with an operation performed on the operation panel 125 by the user. Alternatively, the setting unit 250 may set the size of the document by detection of the size of the document with a physical sensor or through image processing based on an image read by the sensor 320.

The photodetector substrate 120 includes the sensor 320, the processing circuit 340, and a timing controller 360. The sensor 320 is, for example, a complementary metal oxide semiconductor (CMOS) linear image sensor, and includes a first sensor 321. The first sensor 321 has sensitivity to at least a wavelength range (visible wavelength range) of the visible light source 311. The first sensor 321 includes, for example, three-color sensors (line image sensors) of a red (R) sensor, a green (G) sensor, and a blue (B) sensor. In this case, a visible image read with the first sensor 321 is an RGB read image.

The processing circuit 340 generates an output image using the visible image obtained by reading the object P to be read (document) with the first sensor 321. In the present embodiment, an image obtained by reading a document with the first sensor 321 is referred to as a document image, a visible image, or an RGB read image. The document image is an image having the same appearance as the document. When the sensor 320 reads a background area together with a document area, the document image is an image including the document area with the background area removed. The processing circuit 340 is an example of an image processor that processes an image. The image reading device 10 includes the image processor (e.g., the processing circuit 340) and the first sensor 321.

The timing controller 360 sets drive cycles for the operations of the respective components in the photodetector substrate 120, and generates, for example, a clock (CLK) and a line synchronization signal (SYNC).

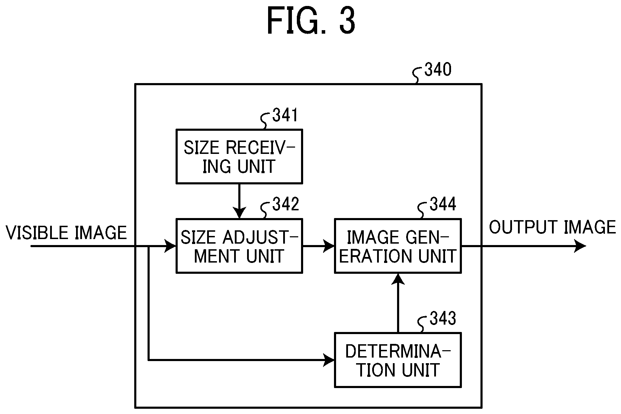

FIG. 3 is a block diagram illustrating a functional configuration of the processing circuit 340 according to the first embodiment. As illustrated in FIG. 3, the processing circuit 340 of the image reading device 10 includes a size receiving unit 341, a size adjustment unit 342, a determination unit 343, and an image generation unit 344.

The size receiving unit 341 receives information on the size set by the setting unit 250, and transmits the received information on the size to the size adjustment unit 342.

The size adjustment unit 342 adjusts the size of the document image based on the information on the size received by the size receiving unit 341. Specifically, the size adjustment unit 342 adjusts the size of the document image such that the document image and a determination image (described later) do not overlap in the output image (such that the determination image is arranged outside the document image).

For example, when both the output image and the document are in A4 size, the size adjustment unit 342 performs adjustment to reduce the document image in order to reserve a space for the determination image in the output image. When the size of the document is sufficiently smaller than the size of the output image and there is a space that allows the determination image to be included, the size adjustment is not performed. When there is a space that allows the determination image to be included even when the document image is enlarged, the size adjustment unit 342 may perform adjustment to increase the size of the document image to increase the visibility of the document image in the output image.

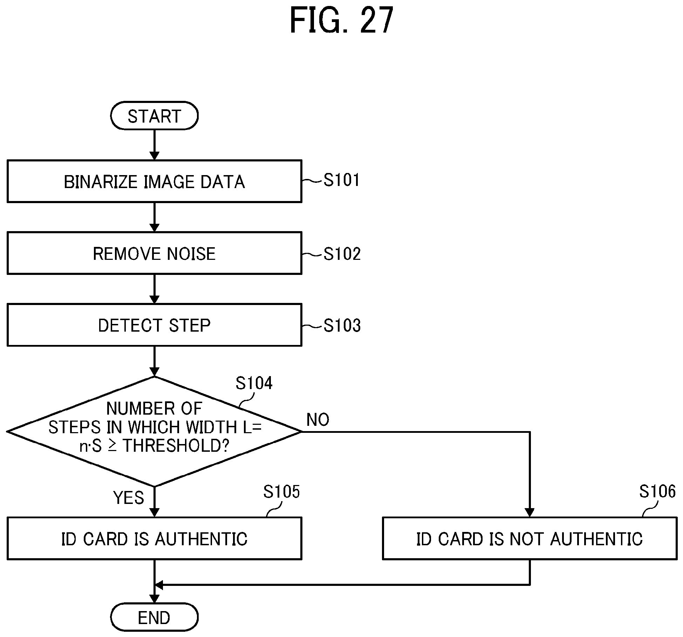

The determination unit 343 determines the authenticity of the document based on the document image. For example, a method described in Japanese Unexamined Patent Application Publication No. 2022-146248, described later with reference to FIGS. 27 to 28D, can be used. The method analyzes, for example, characters of an image, toner of a photograph, a composition of ink, or backlash of an edge (step portion) using an RGB read image serving as a document image to determine the authenticity.

The image generation unit 344 generates an output image including a document image and a determination image indicating a determination result of the determination unit 343, the determination image being arranged outside the area of the document image. The determination image is an image including a character string of the determination result. The determination image includes, for example, a character string such as "authenticity determination result: OK" (when the determination is made as authentic) or "authenticity determination result: No" (when the determination is made as not authentic). The determination image may include, for example, a character string indicating a rank of authenticity. For example, an icon image indicating a character string or a rank such as "rank 1" when the determination is made as authentic, "rank 2" when the determination is not made, and "rank 3" when the determination is made as not authentic may be displayed.

The image generation unit 344 generates an output image in which the resized document image, adjusted by the size adjustment unit 342, and the determination image are arranged not overlapping each other. While the determination image is generated based on the determination result, one of the following may be performed: the determination unit 343 generates a determination image and transmits the determination image to the image generation unit 344; and the image generation unit 344 generates a determination image.

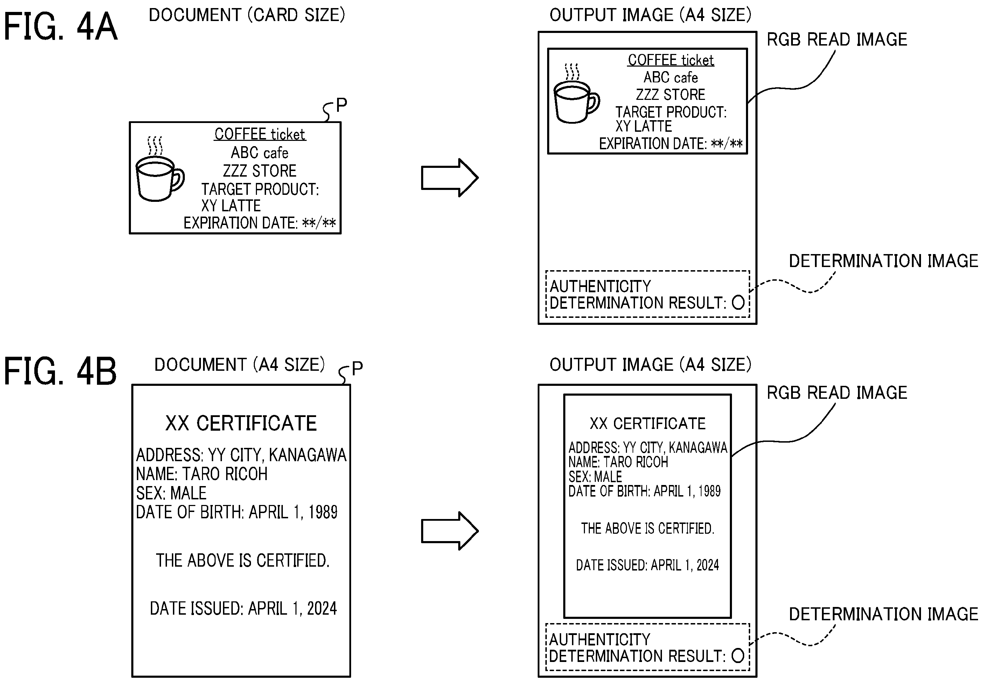

FIGS. 4A and 4B are views illustrating examples of a document and an output image according to the first embodiment. FIG. 4A illustrates a case where the size of a document (object P to be read) is sufficiently small with respect to the size of an output image. For example, when the output image is in A4 size and the document is in card size, such as an identification card or a ticket, there is a sufficient space for arranging a determination image in the output image. Thus, it is determined not to adjust the size of the document image.

In this case, the document image (RGB read image) is included in the output image without being resized. The image generation unit 344 arranges the RGB read image not resized and the determination image not to overlap in the A4 size, to generate the output image.

FIG. 4B illustrates a case where the size of a document (object P to be read) is equivalent to the size of an output image. For example, when the output image is in A4 size and the document is in A4 size, such as a public certificate, the size adjustment unit 342 reduce the size of the document image in order to secure the space for arranging the determination image. For example, the size adjustment unit 342 reduces the size of the document image to 90%. The image generation unit 344 arranges the reduced document image (RGB read image) and the determination image not to overlap with each other in the A4 size, to generate the output image.

The reduction ratio of the size of the document image adjusted by the size adjustment unit 342 is not limited to 90%, and the reduction ratio is determined such that the area of the determination image is removed from the entire area of the output image, and the document image is accommodated in the remaining area. That is, the reduction ratio is determined in accordance with the size of the document, the size of the output image, and the size of the determination image.

The image generation unit 344 may rotate the RGB read image in FIG. 4A by 90 degrees, increase the RGB read image in size, and arrange the RGB read image as in the RGB read image in FIG. 4B to generate the output image. With this configuration, the visibility of the RGB read image can be increased. The sizes of the document and the output image may be sizes other than the card size and the A4 size.

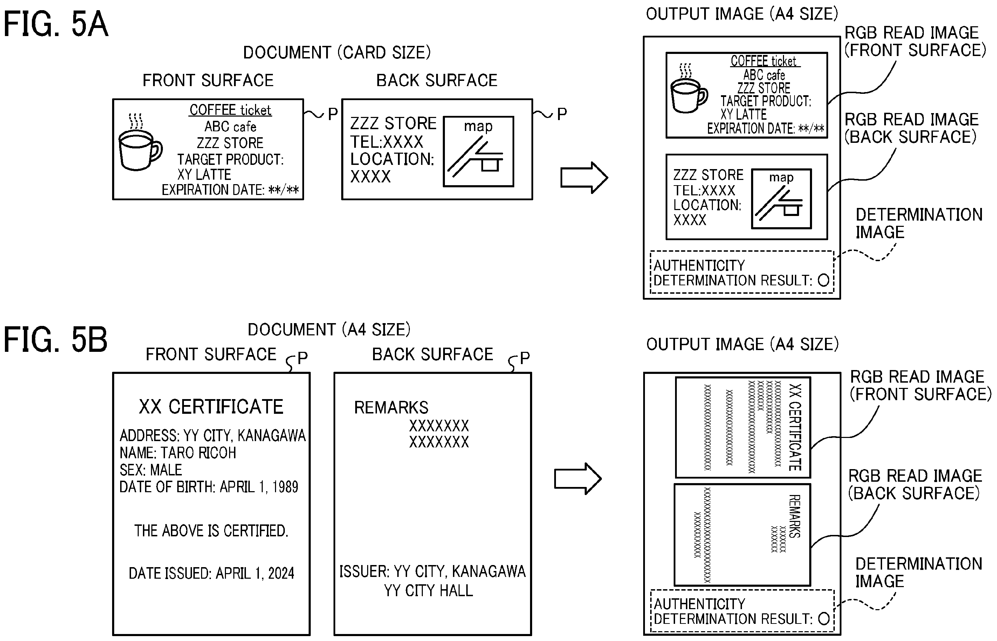

FIGS. 5A and 5B are views illustrating other examples of the document and the output image. An example in which a document has a front surface (an example of a first surface) and a back surface (an example of a second surface), and RGB read images of both surfaces are arranged in an output image will be described. When the information on the front surface and that on the back surface are collected in the output image, the entire document is easily managed and checked. Further, including the determination image in the output image facilitates checking the correspondence between the document image and the determination result.

FIG. 5A illustrates an example in which document images including RGB read images for two surfaces obtained by reading the front and back surfaces of a card-sized document are arranged in an A4-size output image. In this case, there is a sufficient space for arranging the RGB read images representing the front surface and the back surface and the determination image in the output image without an overlap. Thus, it is determined that the size is not to be adjusted by the size adjustment unit 342. The image generation unit 344 arranges the images as illustrated in FIG. 5A to generate the output image.

FIG. 5B illustrates an example in which the sizes of RGB read images for two surfaces obtained by reading the front and back surfaces of a document and the size of an output image are both A4 size. In this case, the size adjustment unit 342 performs size adjustment to generate an output image in which the RGB read images (the document images) for the two surfaces and the determination image are arranged without an overlap. The size adjustment unit 342 adjusts the size of the document images at a reduction ratio of, for example, about 60% to arrange the images for the two surfaces in the remaining area obtained by removing the area of the determination image from the area (A4 size) of the output image. The image generation unit 344 generates an output image in which the RGB read images for the two surfaces after the adjustment and the determination image are arranged without an overlap. In this example, the image generation unit 344 also rotates the RGB read images by 90 degrees so that the two surfaces can be arranged in a large size as possible. With such an arrangement and a reduction ratio, the visibility of the document images can be increased.

When the output images as illustrated in FIGS. 5A and 5B are printed, since both surfaces of the document and the determination image are arranged on one surface, the user can easily confirm the appearance of the document and the determination result without turning over the print surface.

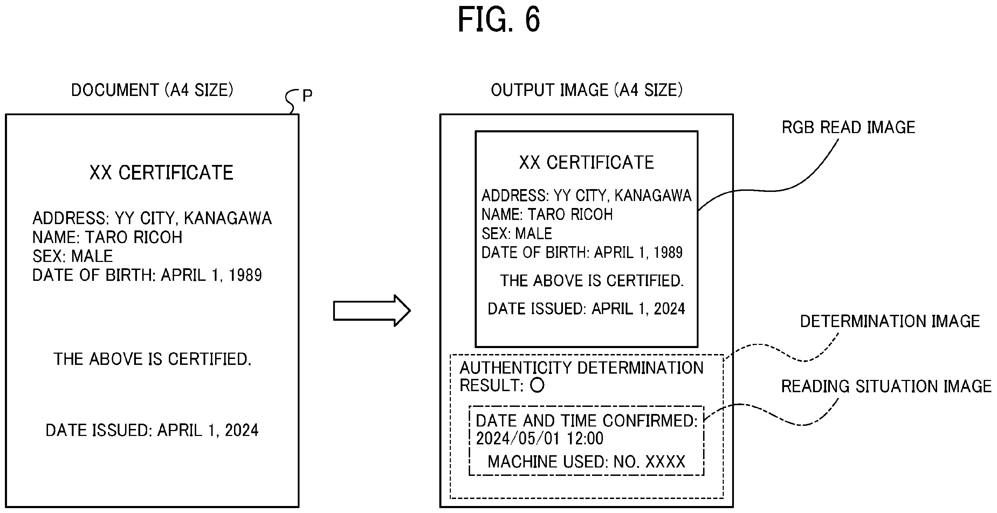

FIG. 6 is a diagram illustrating other examples of the document and the output image. In FIG. 6, a determination image includes an image (reading situation image) indicating a reading situation of the document image, in addition to the determination result. The reading situation image indicates, for example, information such as the date and time of determination of the authenticity (or reading), the machine used, and the person who performed the reading. With the reading situation image included in the determination image, the value of the output image as evidence increases. The user is allowed to confirm the situation in which the output image was generated when viewing the output image. Thus, traceability can increase.

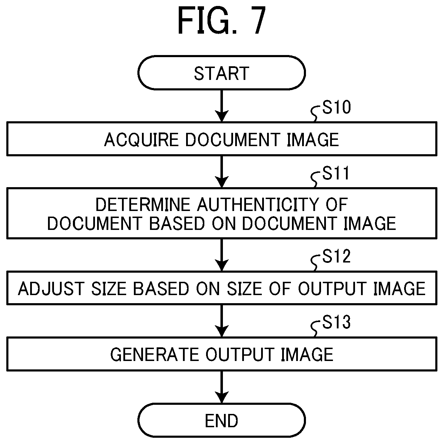

FIG. 7 is a flowchart presenting a processing procedure according to the first embodiment. The size adjustment unit 342 and the determination unit 343 obtain a document image from the sensor 320 (step S10).

The determination unit 343 determines the authenticity of the document based on the document image, and generates the result of determination (step S11). The size adjustment unit 342 adjusts the size of the document image based on, for example, the size of an output image (step S12).

The image generation unit 344 generates an output image including the document image and a determination image, the determination image being arranged outside the area of the document image (step S13).

As described above, the image reading device 10 generates the output image such that the document image and the determination result thereof do not overlap. Thus, the document image having the same appearance as the document and the determination result of the authenticity of the document are collectively provided. That is, the association between the document image and the determination result is clarified, and thus the image including the determination result can be managed as evidence. Further, since the determination image does not overlap the margin in the document image, the entire document (including the margin) can be easily confirmed by viewing the output image.

In the above description, the processing circuit 340 is placed on the photodetector substrate 120. However, the processing circuit 340 may be placed outside the photodetector substrate 120. For example, the processing circuit 340 may be mounted on the image processing board 230. The circuit scale of the image processing board 230 is typically larger than that of the photodetector substrate 120, and is designed with sufficient margin. Accordingly, the processing circuit 340 can be mounted without increasing the circuit scale of the image processing board 230.

The authenticity determination process performed in step S11 of FIG. 7 will be described with reference to FIG. 27. For example, the authenticity of an identification (ID) card is determined based on a step included in a line of an image obtained by printing the ID card by thermal transfer printing.

In step S101, the determination unit 343 converts the image data of the character portion into a gray scale image as appropriate, and then binarizes the image data. In step S102, noise is removed from the binarized image data.

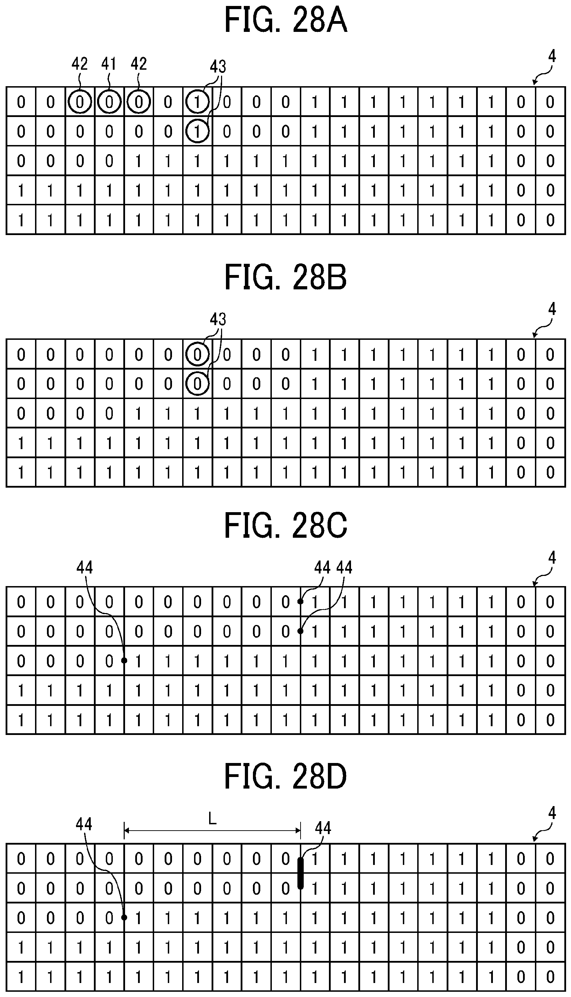

FIG. 28A illustrates binarized image data 4, in which a value "1" indicates a black pixel and a value "0" indicates a white pixel. In step S102, the value of a target pixel 41 in the image data 4 is set to the majority of the values of a group of pixels including the target pixel 41 and pixels 42 on both sides of the target pixel 41 in the sub-scanning direction. The sub-scanning direction corresponds to the row direction of the image data 4, that is, the lateral direction in FIG. 28A.

The above processing is repeated by setting each pixel of the image data 4 as the target pixel 41, to remove noise from the image data 4. For example, in FIG. 28A, pixels 43 (black pixel) are noises due to dust on the ID card. The above-described processing is performed by setting the pixel 43 as the target pixel 41, to remove the noise (the pixel is made white) as illustrated in FIG. 28B.

In step S103, the determination unit 343 detects a step on a line included in a character from the image data 4 after the noise is removed.

The method for detecting a step is not limited. For example, as illustrated in FIG. 28C, a position where the value of the pixel changes from "0" to "1" or from "1" to "0" in the sub-scanning direction is detected as a boundary 44.

Then, as illustrated in FIG. 28D, the determination unit 343 calculates a distance L between the adjacent boundaries 44 in the column direction (the vertical direction in FIG. 28D) of the image data 4. At this time, when the positions of the boundaries 44 in the sub-scanning direction are the same between the adjacent rows in the column direction of the image data 4 (see the boundary 44 on the right in FIG. 28C), these boundaries 44 are regarded as one continuous boundary 44 as illustrated in FIG. 28D.

The distance L is calculated from the number of pixels. When the distance L is equal to or greater than a predetermined value, the determination unit 343 detects the distance L as a step of the character and sets the distance L as the width of the step in the sub-scanning direction.

In the above example, when the positions of the boundaries 44 in the sub-scanning direction are the same between the rows adjacent in the column direction of the image data 4, these boundaries 44 are regarded as parts of one continuous boundary 44. Alternatively, when the difference in the positions of the boundaries 44 in the sub-scanning direction is within a certain value between the rows adjacent in the column direction of the image data 4, these boundaries 44 may be regarded as parts of one continuous boundary 44.

The determination unit 343 detects one or more steps from the image data 4 as described above. Then, the length in the sub-scanning direction of the printer (the number of pixels of the image data 4 corresponding to this length) is defined as a reference value S, and a width L of each step is compared with the reference value S.

In step S104, the determination unit 343 determines whether the number of the steps in which the width L is equal to the integral multiple of the reference value S (L=n·S, n=1, 2, 3...) is equal to or greater than a threshold. When the number of steps in which the width L=n·S is equal to or greater than the threshold (Yes in step S104), the determination unit 343 determines that the character is printed by the thermal transfer printer having the dpi used for an authentic ID card, and determines that the ID card is authentic in step S105. By contrast, when the number of the number of steps in which L=n·S is less than the threshold (No in step S104), the ID card is determined to be not authentic in step S106. Note that the "step in which the width L=n·S" includes a step in which the width L is within an error range of n·S. The error range is set freely in consideration of, for example, inspection accuracy.

The threshold is not limited, but may be determined in advance according to the characters to be extracted. Alternatively, the threshold may be a ratio to the number of steps detected in step S103.

In the above example, the authenticity of the ID card is determined using the step based on the fact that the step peculiar to the thermal head element in the thermal transfer printing appears in the printed portion. Thus, an ID card forged by, for example, an inkjet printer is determined to be not authentic. In printing the target portion of the ID card, an expensive high-resolution scanner is not necessary as long as the ID card is scanned with high precision by moving the scanner head (the light-receiving element) finely. Then, the system can be inexpensive and pervasive.

### Second Embodiment

In a second embodiment, a visible image and an invisible image are included in a document image, and the authenticity of a document is determined using the visible image and the invisible image. In the following description of the second embodiment, descriptions of elements overlapped with those in the first embodiment are omitted, and differences from the first embodiment are described.

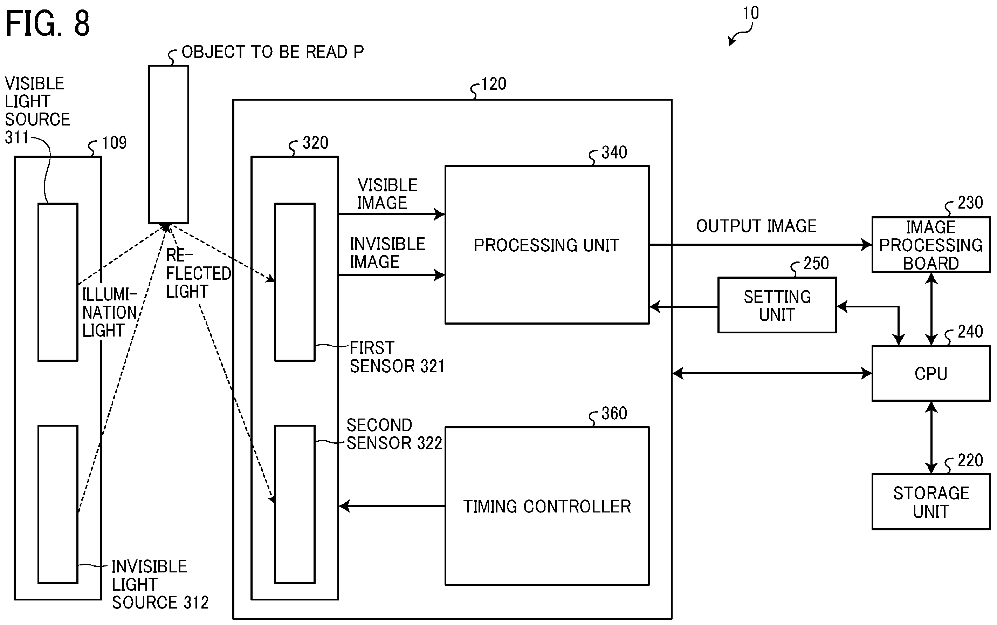

FIG. 8 is a block diagram illustrating a configuration of an image reading device 10 according to the second embodiment.

The difference from the first embodiment is that the light source 109 further includes an invisible light source 312, and the sensor 320 further includes a second sensor 322.

The invisible light source 312 is, for example, an infrared light source or an ultraviolet light source. The second sensor 322 is a sensor that has sensitivity in an invisible wavelength range and reads, for example, near infrared light or ultraviolet light. The sensor 320 transmits a visible image obtained by reading a document (object P to be read) with the first sensor 321 and an invisible image obtained by reading the document with the second sensor 322 to the processing circuit 340. In the present embodiment, an image obtained by reading a document with the second sensor 322 is referred to as a document image, an invisible image, or a near infrared (NIR) read image when read using near infrared light.

The first sensor 321 and the second sensor 322 may be implemented by one device or separate devices.

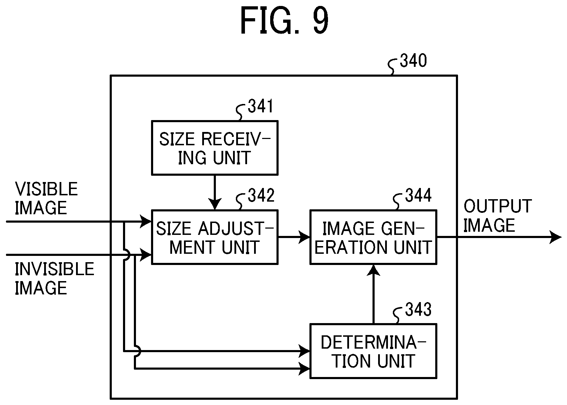

FIG. 9 is a diagram illustrating a functional configuration of the processing circuit 340 according to the second embodiment. The difference from the first embodiment is that the invisible image is input to the size adjustment unit 342 and the determination unit 343, in addition to the visible image.

The determination unit 343 determines authenticity using a feature of the document image detected from the invisible image. For example, the following methods can be used as the determination method. However, the determination method is not limited to the following methods and any method may be used.
(1) A method of reading a document printed with ultraviolet ink using an ultraviolet sensor
(2) A method of detecting the amount of carbon contained in a document using a feature that near infrared light is absorbed in ink of carbon black
(3) A method of using special print such as latent image print that can be detected by only a near infrared sensor

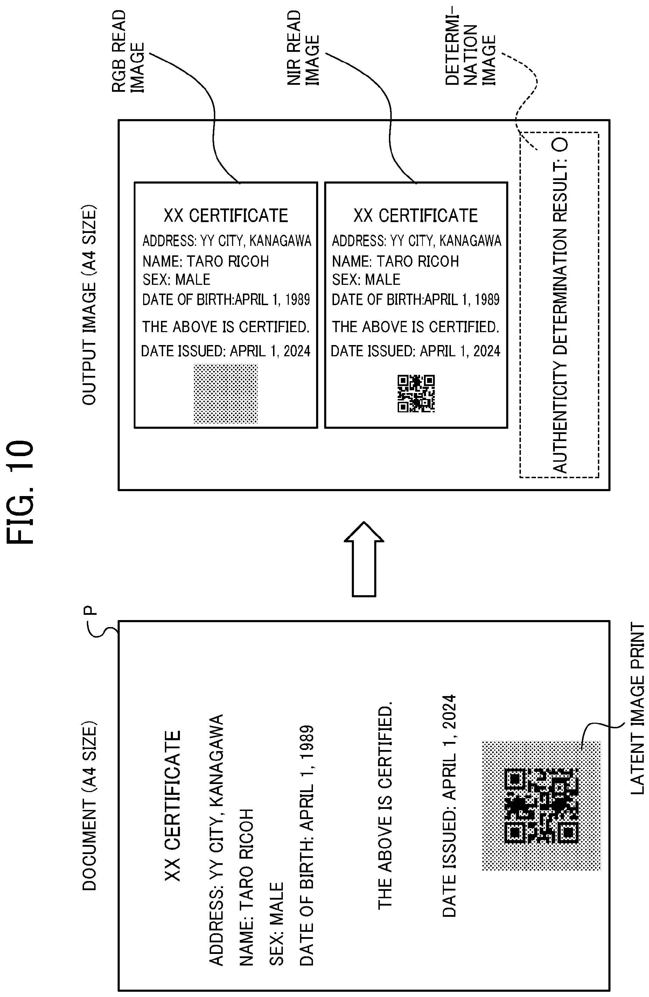

FIG. 10 is a diagram illustrating a document and an output image according to the second embodiment. An example using the latent image print of the above-described method (3) will be described. The latent image is an image formed to be invisible (or hardly visible) to the naked eyes by any method. In the present embodiment, the latent image print readable using near infrared light is generated as follows.

In commercial printing, inks (or toners) of basic four colors of cyan (C), magenta (M), yellow (Y), and black (B) are used. Among these four basic colors, B is a black pigment containing carbon black, and exhibits absorption over the entire area from the ultraviolet range to the infrared range. By contrast, black (CMY) formed by superimposing C, M, and Y among the four basic colors does not absorb infrared rays. Thus, by superimposing a special dot image (halftone image) with CMY on an image of a two-dimensional code formed with B, latent image print that can be detected only by the near infrared sensor is generated.

A two-dimensional code is formed on a document in FIG. 10 by latent image print. While the two-dimensional code cannot be recognized in a visible image (RGB read image), the two-dimensional code can be recognized in an invisible image (NIR read image). By contrast, since the two-dimensional code cannot be recognized even in an invisible image of a forged product created by reading a document with the visible light sensor, it is determined that the forged product is not authentic. In FIG. 10, in the output image, a determination image, an RGB read image indicating a document as evidence, and an NIR read image used for the determination of authenticity are arranged not to overlap.

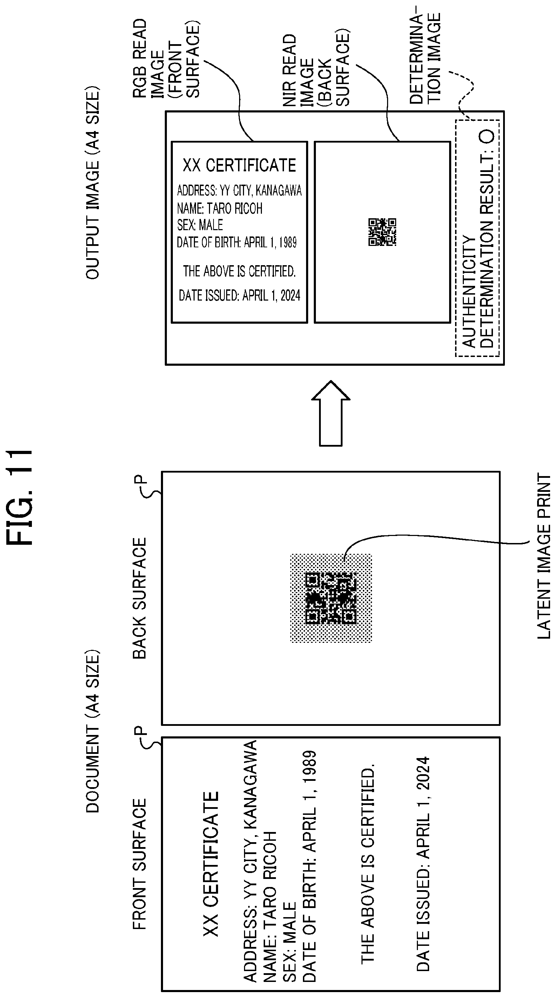

FIG. 11 is a diagram illustrating other examples of the document and the output image according to the second embodiment. The difference from FIG. 10 is that latent image print including a two-dimensional code is formed on the back surface of a document. In this example, as illustrated in FIG. 11, an RGB read image (front surface) for the front surface indicating the document content and an NIR read image (back surface) for the back surface used for the determination of authenticity are arranged in an output image.

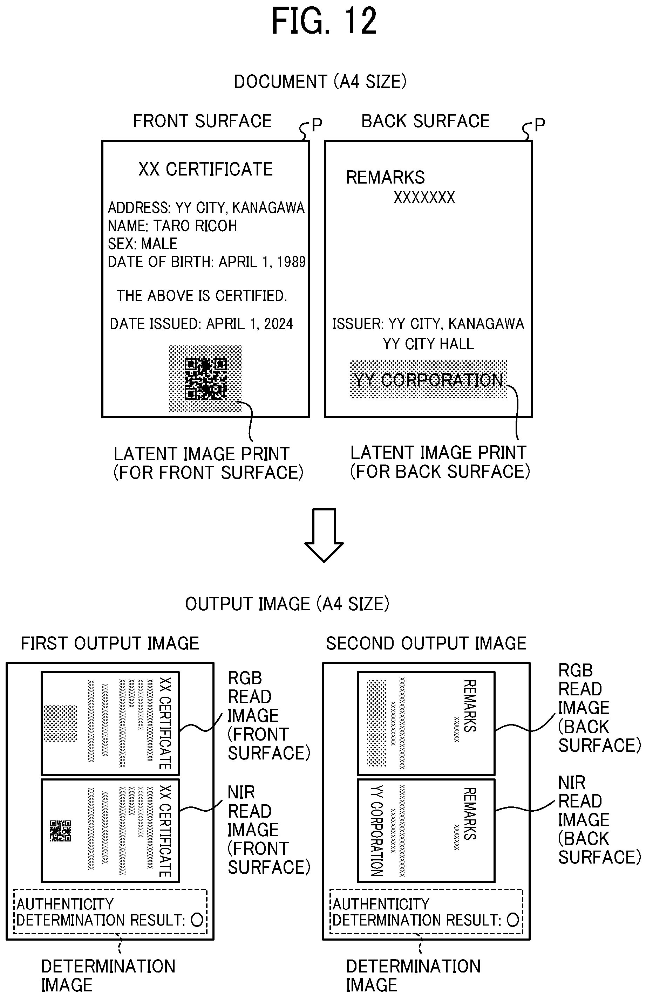

FIG. 12 is a diagram illustrating other examples of the document and the output image according to the second embodiment. In this example, latent image print including a two-dimensional code is formed on the front surface of a document, and latent image print including characters of a company name is formed on the back surface of the document. The image generation unit 344 generates a first output image in which an RGB read image (front surface) and an NIR read image (front surface) serving as document images of the front surface, and a determination image indicating a determination result of the front surface are arranged at positions not overlapping each other. Additionally, the image generation unit 344 generates a second output image in which an RGB read image (back surface) and an NIR read image (back surface) serving as document images of the back surface, and a determination image indicating a determination result of the back surface are arranged at positions not overlapping each other.

The first output image and the second output image may be generated as a file including the first output image and the second output image as a first page and a second page, respectively. When the first output image and the second output image are printed, the first output image can be formed on the front surface of a print medium, and the second output image can be formed on the back surface of the print medium. The RGB read image (front surface) is an example of a first visible image, the NIR read image (front surface) is an example of a first invisible image, and the determination image indicating the determination result of the front surface is an example of a first determination image.

The RGB read image (back surface) is an example of a second visible image, the NIR read image (back surface) is an example of a second invisible image, and the determination image indicating the determination result of the back surface is an example of a second determination image.

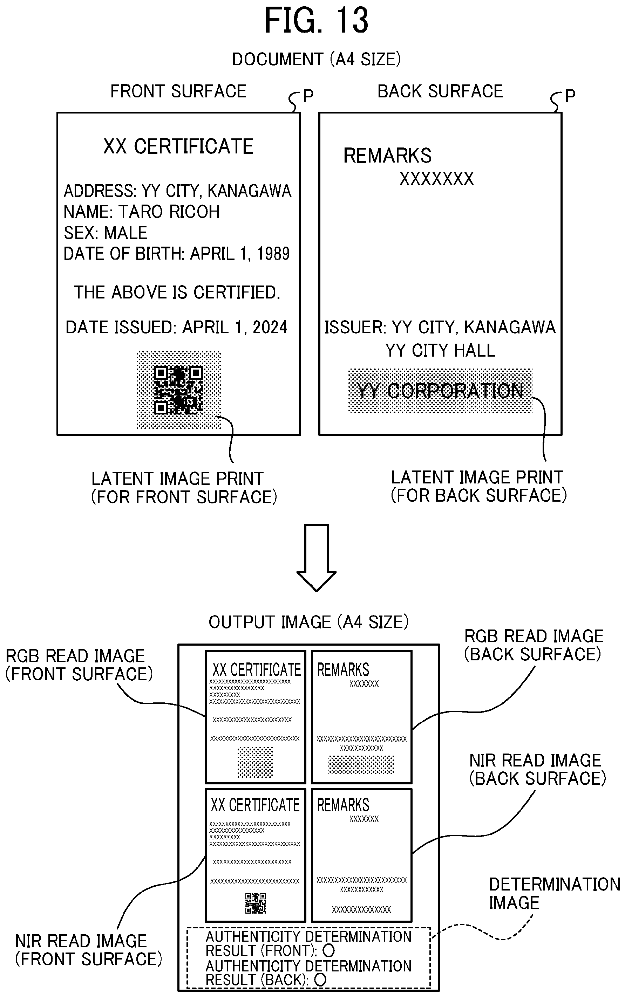

FIG. 13 is a diagram illustrating other examples of the document and the output image according to the second embodiment. The document in this example is the same as the document illustrated in FIG. 12. When the size of the document image is reduced by increasing the reduction ratio to be used by the size adjustment unit 342, the image generation unit 344 can cause the RGB read images and the NIR read images of the two front and back surfaces of the document to be included in one output image. That is, as illustrated in FIG. 13, an output image in which the determination image indicating the determination result of the front surface and the determination result of the back surface, the RGB read image (front surface), the NIR read image (front surface), the RGB read image (back surface), and the NIR read image (back surface) are arranged at positions not overlapping each other is generated. The determination image may include a first determination image indicating the determination result of the front surface and a second determination image indicating the determination result of the back surface.

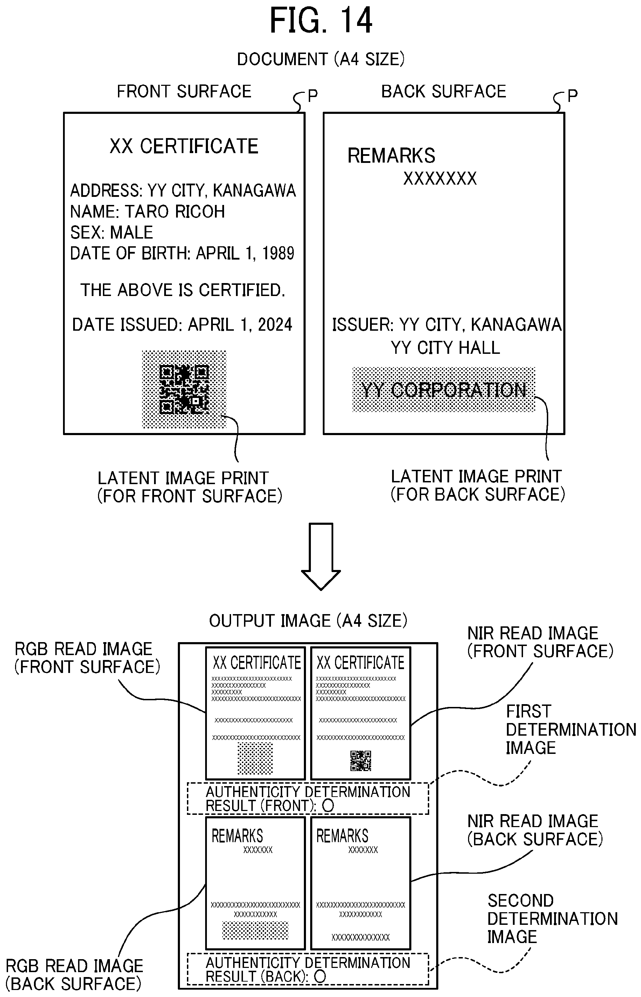

FIG. 14 is a diagram illustrating other examples of the document and the output image according to the second embodiment. The document in this example is the same as the document illustrated in FIG. 12. Similarly to FIG. 13, FIG. 14 illustrates an example in which the RGB read images and the NIR read images of the two front and back surfaces of the document are included in one output image. In this example, the first determination image, the RGB read image (front surface), and the NIR read image (front surface) are arranged at positions not overlapping each other in an upper half area of an output image, and the second determination image, the RGB read image (back surface), and the NIR read image (back surface) are arranged at positions not overlapping each other in a lower half area of the output image.

As described above, the output image in which the document image and the determination result thereof do not overlap is generated. Thus, the document image having the same appearance as the document and the determination result of the authenticity of the document are collectively provided. Further, the NIR read image used for the determination of authenticity can be arranged in the output image while the visibility of the document is held.

For the infrared image sensor according to the present embodiment, a typical image sensor using silicon as a base material, which is similar to the first sensor 321, may be used. The infrared image sensor, however, does not include a color filter. Thus, when the infrared image sensor is used as the second sensor 322, the configuration of the present embodiment can be manufactured at low cost.

### Third Embodiment

In a third embodiment, information such as a determination result generated by the determination unit 343 is displayed on, for example, the touch screen of the operation panel 125. In the following description of the third embodiment, descriptions of elements overlapped with those in the first and second embodiments are omitted, and differences from the first and second embodiments are described.

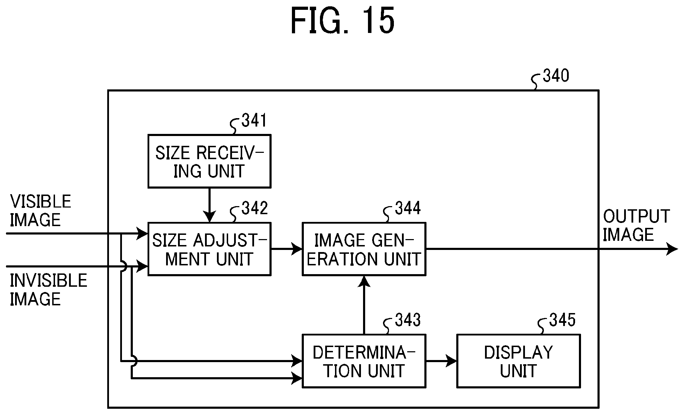

FIG. 15 is a diagram illustrating a functional configuration of the processing circuit 340 according to the third embodiment. The difference from the second embodiment is that the processing circuit 340 further includes a display unit 345.

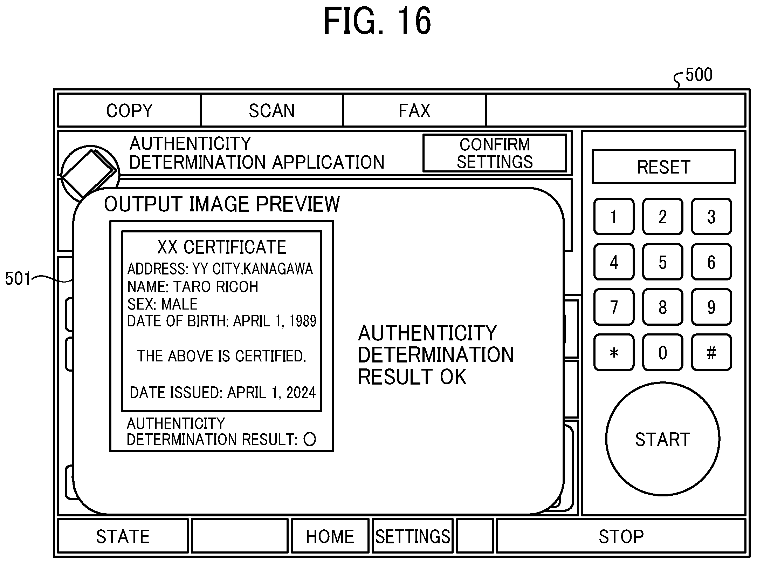

The display unit 345 displays the determination result generated by the determination unit 343 on a display screen. FIG. 16 is a view of a display screen 500 displayed by the display unit 345. As illustrated in FIG. 16, the display screen 500 includes a determination result screen 501. On the determination result screen 501, an output image is displayed with a reduced size as "output screen preview," and a character string indicating a determination result ("authenticity determination result OK" when the determination is made as authentic, or "authenticity determination result No" when the determination is made as not authentic) is displayed.

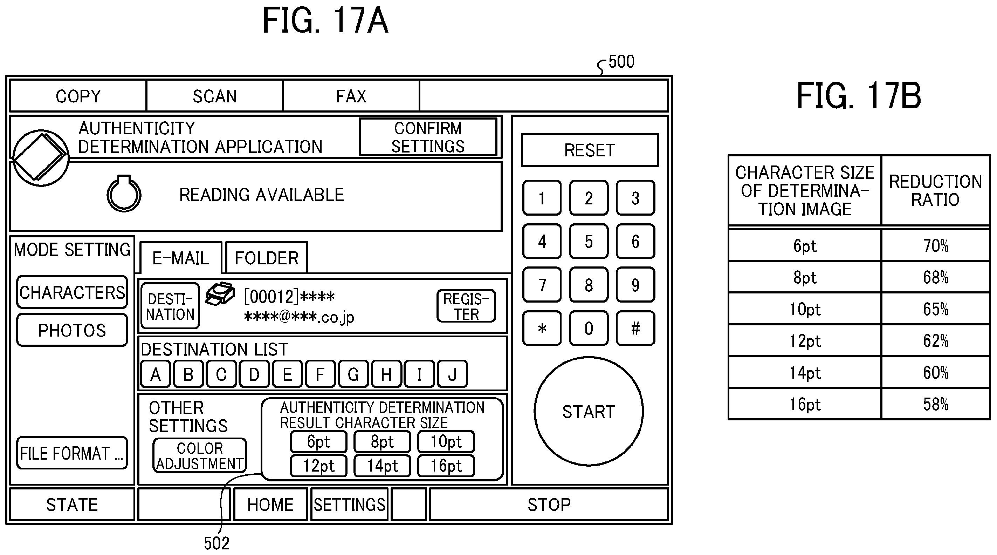

The display unit 345 may further display a graphical representation for receiving the selection of character size in the determination image. FIG. 17A is a diagram illustrating a graphical representation for receiving the selection of character size, and FIG. 17B is a table presenting a reduction ratio used for size adjustment. As illustrated in FIG. 17A, the display screen 500 includes a character size selection screen 502. On the character size selection screen 502, buttons of six types of character sizes are displayed as "authenticity determination result character size," and the user can select the size of character of the determination image by input operation such as a touch input.

The size adjustment unit 342 changes the reduction ratio to be used for size adjustment in accordance with the selected size of character. When the sizes of the document and the output image are both A4 size, for example, the size adjustment unit 342 adjusts the size of the document image using the reduction ratio corresponding to the size of character in accordance with the table presented in FIG. 17B. With this configuration, even when the size of the determination image changes in accordance with the size of character, the document image and the determination image can be arranged without an overlap. Since the size of the document image is adjusted to be as large as possible in accordance with the size of character, the visibility can be further increased.

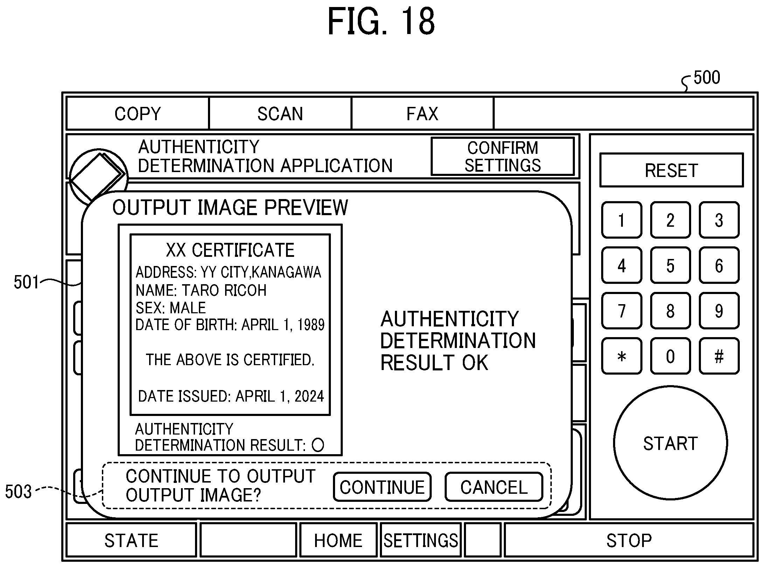

FIG. 18 is a view of another example of the display screen 500 displayed by the display unit 345. The difference from FIG. 16 is that the display screen 500 further includes an output/non-output selection image 503. The output/non-output selection image 503 is a graphical representation for receiving selection of whether to output an output image. The output of an output image is, for example, transmission of the data of the output image to the outside of the image reading device 10 or storage of the data of the output image in the storage unit 220. When the image reading device 10 is included in an image forming apparatus as in a fifth embodiment (described later), the output of the output image may be printing of the output image.

In the output/non-output selection image 503, when the user selects a "continue" button, the output image is output, and when the user selects a "cancel" button, the output image is deleted. This configuration allows the user to confirm the determination result and select whether to output the output image. The user selects the "cancel" button, for example, when an invalid determination result is displayed due to a setting error of the document (an error relating to the front and back surfaces of the document, the orientation of the document, the type of the document, or the like) or contamination of the document. As described above, since the user can confirm the output image and select whether to redo the processing before the output image is output, a wasteful print output or the like can be reduced.

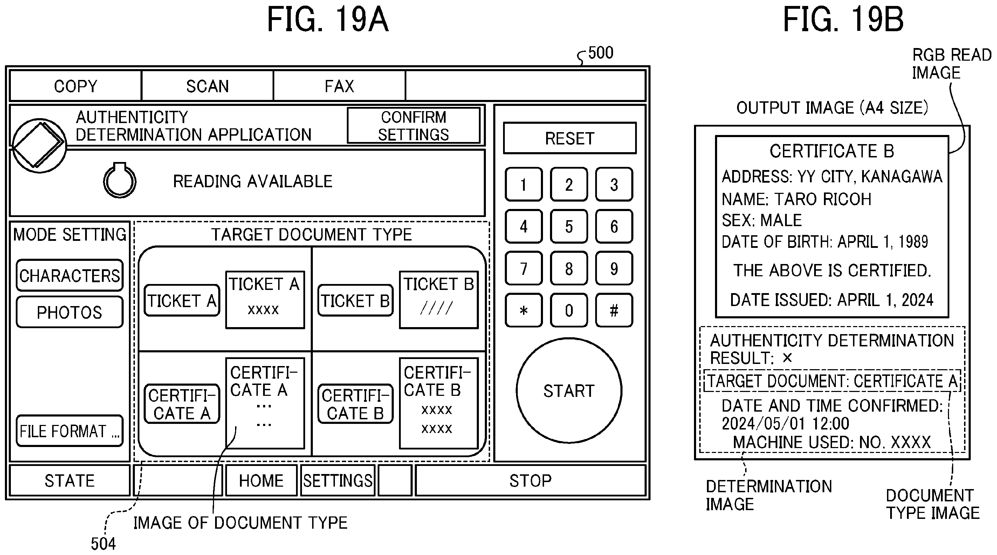

An example in which a type of document is selected before the authenticity of the document is determined will be described. FIGS. 19A and 19B are views illustrating an example of an image for selecting the type of document, and an example of a document type image. For example, an appropriate determination method may be different depending on the type of document, such as the content included in the document, the position of the content in the document, and the size of the area used to determine the authenticity. In such a case, by allowing the user to select the type of document, the authenticity can be appropriately determined in accordance with the type of document.

As illustrated in FIG. 19A, the display screen 500 includes a document type selection screen 504. On the document type selection screen 504, buttons corresponding to four types of documents are displayed as "target document type," and the user can select the type of document by a touch operation or the like. On the right side of each button, an image corresponding to the type of each document is displayed.

As illustrated in FIG. 19B, a determination image included in an output image may include an image indicating the type of document (document type image). The type of document indicated in the document type image is the type of document corresponding to the determination method used by the determination unit 343 to determine the authenticity. The type of document indicated in the document type image may be any one of the type of document selected through the document type selection screen 504 and the type of document detected by the image reading device 10 using a physical sensor, image recognition, or the like.

By confirming the document type selection screen 504, the user can easily notice an error in selection or detection of the type of document. For example, when the authenticity of a document of a certificate B is determined, if the user erroneously selects a certificate A, the determination unit 343 cannot make appropriate determination and determines that the document is not authentic. Even in such a case, when the document type image is included in the determination image as illustrated in FIG. 19B, the user can easily notice the selection error of the type of document by confirming the RGB read image and the document type image of the output image.

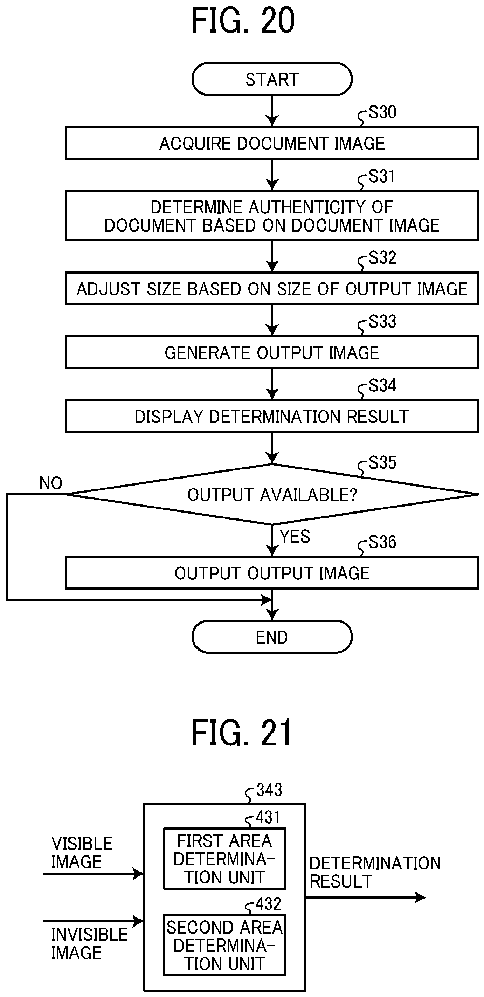

FIG. 20 is a flowchart presenting a processing procedure according to the third embodiment. The difference from FIG. 7 is that steps S34 to S36 are further executed. Since the processing in steps S30 to S33 in FIG. 20 is the same as the processing in steps S10 to S13 in FIG. 7, the redundant description will be omitted.

The display unit 345 causes the touch screen or the like to display a determination result of the determination unit 343 (step S34). When an output image can be output (when the "continue" button is selected in the output/non-output selection image 503) (step S35: Yes), the processing circuit 340 outputs the output image (step S36). By contrast, when the output image cannot be output (when the "cancel" button is selected in the output/non-output selection image 503) (step S35: No), the output image is not output, and the process is ended.

As described above, the output image in which the document image and the determination result thereof do not overlap is generated. Thus, the document image having the same appearance as the document and the determination result of the authenticity of the document are collectively provided. With the display of the determination result of the authenticity or the like, the user can confirm the determination result or the like before the output image is output.

### Fourth Embodiment

In a fourth embodiment, the authenticity of one area or multiple areas of a document is determined, and an image indicating the authenticity of each area is included in a determination image. In the following description of the fourth embodiment, descriptions of elements overlapped with those in the first to third embodiments are omitted, and differences from the first to third embodiments are described.

FIG. 21 is a diagram illustrating a functional configuration of a determination unit 343 according to the fourth embodiment. The difference from the third embodiment is that the determination unit 343 further includes a first area determination unit 431 and a second area determination unit 432.

The first area determination unit 431 determines the authenticity of a first area (for example, a picture area in which a picture is formed) of a document. For example, a picture area is formed with toner with a low carbon content to enrich the coloration. In such a case, the picture area can be read with the near infrared sensor to estimate the amount of carbon. The estimated amount of carbon is compared with the amount of carbon of the authentic product, and thus it is possible to determine whether the authentic product is a copied forged product.

The second area determination unit 432 determines the authenticity of a second area (for example, a character area in which a character is formed) of the document. In the character area, the image is often formed with toner having a high carbon content. Even in such a case, the estimated amount of carbon is compared with the amount of carbon of the authentic product, and thus the authenticity can be determined.

When both the first area determination unit 431 and the second area determination unit 432 determine that the document is authentic, the determination unit 343 determines that the document is authentic. When at least one of the first area determination unit 431 and the second area determination unit 432 determines that the document is not authentic, the determination unit 343 determines that the document is not authentic.

The image generation unit 344 generates an output image in which a determination image including an image indicating a determination result, an image indicating the authenticity of the picture area, and an image indicating the authenticity of the character area, and a document image are arranged without an overlap. While the example in which the authenticity of each of the two areas of the document is determined has been described above, the number of areas may be one or three or more. The document may include one or more picture areas and one or more character areas, the document may include just one or more picture areas, or the document may include just one or more character areas. The type of area may be an area other than the picture area or the character area.

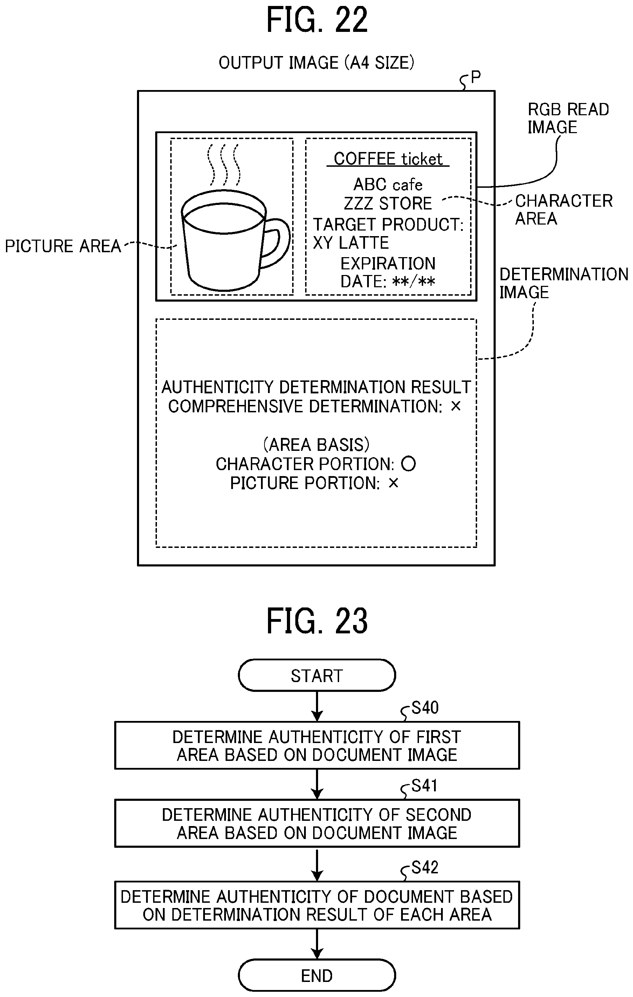

FIG. 22 is a diagram illustrating an output image according to the fourth embodiment. As illustrated in FIG. 22, an RGB read image and a determination image are arranged in the output image. The determination image includes an image indicating a determination result (the authenticity of the document) and an image indicating the authenticity of each area. In this example, the character area is determined as authentic and "character portion: OK" is displayed. By contrast, the picture area is determined as not authentic and "picture portion: No" is displayed. Thus, it is determined that the document is not authentic, and "comprehensive determination: No" is displayed. In the output image, an NIR read image may be arranged together with the RGB read image.

FIG. 23 is a flowchart presenting a determination process according to the fourth embodiment. The first area determination unit 431 determines the authenticity of a first area (for example, a picture area) based on a document image (step S40).

The second area determination unit 432 determines the authenticity of a second area (for example, a character area) based on the document image (step S41). The determination unit 343 determines the authenticity of the document based on the determination result of each area (step S42).

As described above, the output image in which the document image and the determination result thereof do not overlap is generated. Thus, the document image having the same appearance as the document and the determination result of the authenticity of the document are collectively provided. With the image indicating the authenticity of each of one area or multiple areas of the document included in the determination image, the user can easily recognize an area having a problem in the document determined as not authentic.

### Fifth Embodiment

In a fifth embodiment, the image reading device 10 according to any one of the first to fourth embodiments is included in an image forming apparatus 400. In the following description of the fifth embodiment, descriptions of elements overlapped with those in the first to fourth embodiments are omitted, and differences from the first to fourth embodiments are described.

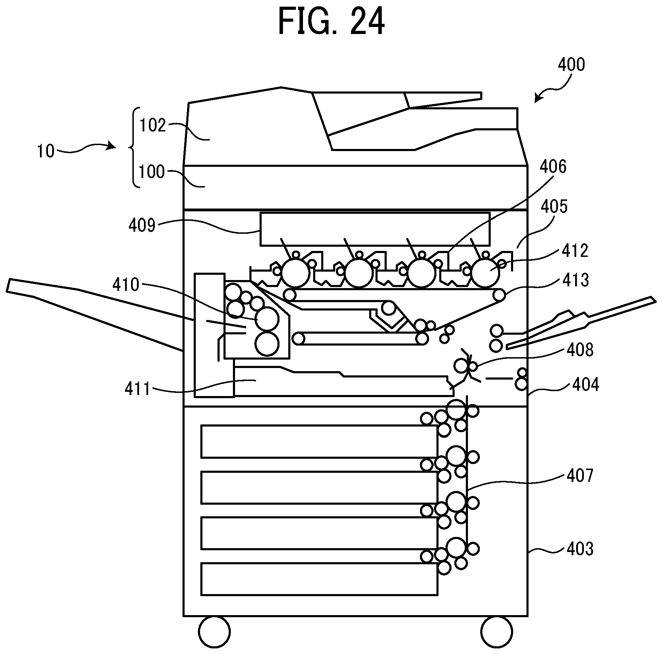

FIG. 24 is a cross-sectional view schematically illustrating a configuration of a mechanical section of the image forming apparatus 400 according to the fifth embodiment. The image forming apparatus 400 (for example, a digital copier) includes the image reading device 10, a sheet feeder 403, and an image forming apparatus body 404. The image reading device 10 includes the reading unit body 100 and the ADF 102, and has the same configuration as in any one of the first to fourth embodiments.

The image forming apparatus body 404 includes a tandem image forming device 405, a registration roller pair 408 that conveys a recording sheet (medium) supplied from the sheet feeder 403 through a conveyance path 407 to the image forming device 405, an optical writing device 409, a fixing and conveyance device 410, and a duplex tray 411. The image forming apparatus body 404 is an example of an image forming device.

The image forming device 405 includes four photoconductor drums 412 corresponding to four colors of Y, M, C, and K arranged in parallel. Image forming elements including a charger, a developing device 406, a transfer device, a cleaner, and a static eliminator are arranged around each of the four photoconductor drums 412. Additionally, an intermediate transfer belt 413 is stretched over a driving roller and a driven roller, such that the intermediate transfer belt 413 is sandwiched between the transfer devices and the photoconductor drums 412 to form nips therebetween.

In the tandem image forming apparatus 400 configured as described above, optical writing is performed on the photoconductor drum 412 corresponding to each color for each of the colors of Y, M, C, and K, the developing device 406 develops toner of each of the colors of Y, M, C, and K, and an image is primarily transferred onto the intermediate transfer belt 413 in the order of, for example, Y, M, C, and K. The full-color image formed by superimposing the four-color images by the primary transfer is secondarily transferred onto the recording sheet and is fixed, and then the recording sheet is ejected. Thus, the full-color image is formed on the recording sheet.

When an output image is printed and output in the present embodiment, an output image may be printed on the front surface (or the back surface) of a sheet (an example of a medium), or output images may be separately printed on the front surface and the back surface of the sheet. Thus, the document image and the determination image are formed on one surface or formed over both sides of the sheet, and the determination image is formed outside the document image. Instead of printing the output image, the image forming apparatus 400 may print the document image whose size has been adjusted by the size adjustment unit 342 and the determination image generated by the determination unit 343 or the image generation unit 344 as described above.

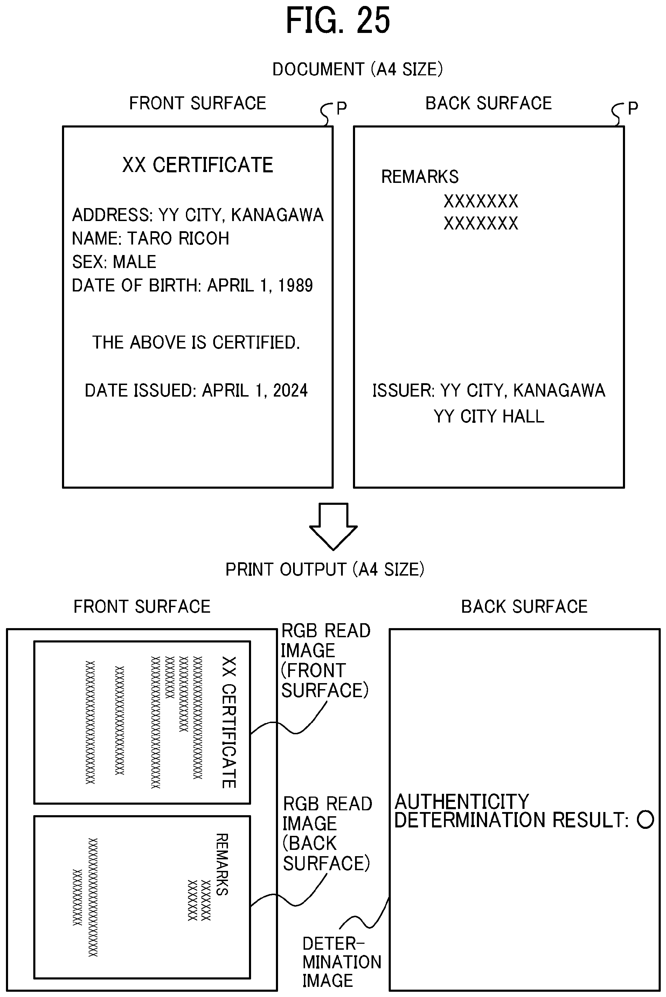

FIG. 25 is a diagram illustrating a document and a print output according to the fifth embodiment. In this example, an RGB read image (front surface) obtained by reading the front surface of a document and an RGB read image (back surface) obtained by reading the back surface of the document are printed on the front surface of a sheet, and a determination image is printed on the back surface of the sheet. As described above, since the document images and the determination image are printed on the different surfaces of the same sheet, the document image and the determination image are provided collectively.

As described above, with the present embodiment, since the image reading device 10 described in any one of the first to fourth embodiments is provided, the image forming apparatus 400 including the image reading device 10 that can collectively provide the notification of the document image having the same appearance as the document and the determination result of the authenticity of the document can be provided.

FIG. 24 illustrates the image forming apparatus 400 having an electrophotographic image forming mechanism. **In** some examples, the image forming apparatus 400 may include another image forming mechanism such as an inkjet image forming mechanism.

While the processing circuit 340 is included in the image reading device 10 in the above description, the processing circuit 340 may be included in the image forming apparatus body 404 instead of the image reading device 10. Thus, the image forming apparatus 400 may include the image reading device 10 including the processing circuit 340, the sheet feeder 403, and the image forming apparatus body 404 not including the processing circuit 340; or the image forming apparatus 400 may include the image reading device 10 not including the processing circuit 340, the sheet feeder 403, and the image forming apparatus body 404 including the processing circuit 340.

The application of the image reading device 10 according to any one of the first to fourth embodiments to a medical information management system is described below.

In recent years, in the medical field, an operation has been advanced in which a document including medical information such as a medical examination or a medical expenses receipt (e.g., a breakdown of medical expenses) is digitized (converted into data) and stored, and is utilized as big data. Accordingly, an efficient treatment or preventive measure corresponding to the state of the patient can be performed. By contrast, some documents handled in the medical field are converted into data by reading a sheet on which the signature or the description is written by the patient. In such a case, it may be necessary to determine the authenticity of the medical document to be read, for example, whether the medical document is the original.

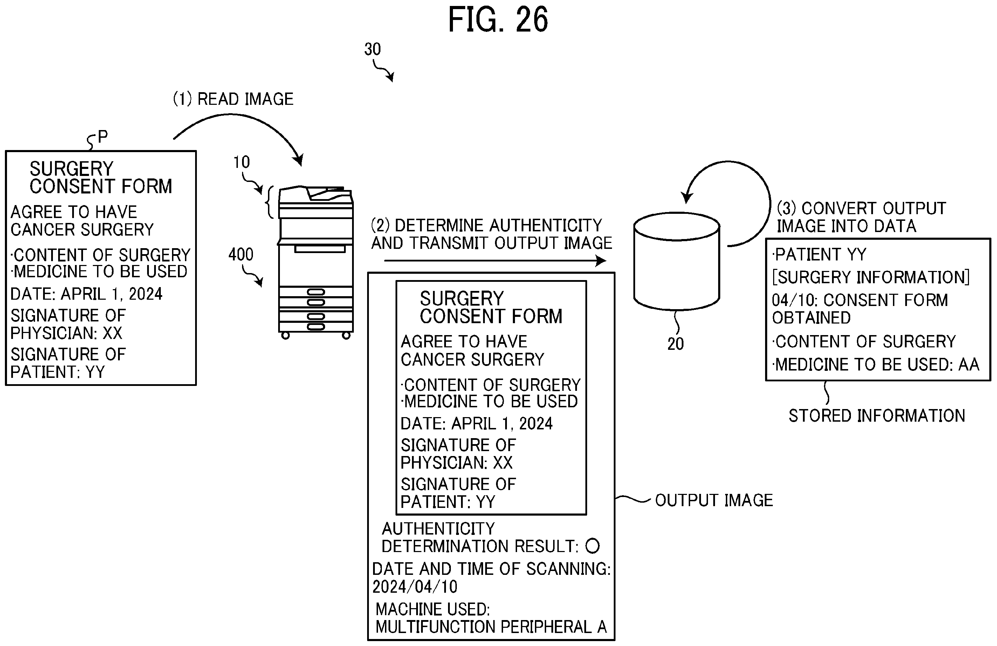

FIG. 26 is a diagram illustrating conversion of medical information into data performed by a medical information management system 30. As illustrated in FIG. 26, the medical information management system 30 includes the image reading device 10 and a server 20 that manages an image relating to medical information read by the image reading device 10. The image reading device 10 and the server 20 are connected to each other via, for example, a communication network. The image reading device 10 may be included in an image forming apparatus 400 as illustrated in FIG. 26.

An example in which a surgery consent form (consent form) to which, for example, a patient makes the signature or the like is converted into data will be described. In many cases, the signature of a patient or a family member of the patient and the signature of a physician are made on a sheet output of a consent form.

Thus, the authenticity of the consent form is determined, for example, whether the consent form is an authorized consent form printed by an authorized process and whether the signature is not forged by another person. The image reading device 10 reads a consent form that is a document ((1) in FIG. 26), simultaneously performs determination of authenticity using a document image obtained by reading the document, and transmits an output image including the result of the determination to the server 20 ((2) in FIG. 26). The consent form is an example of a document including medical information.

The server 20 converts the content of the document image included in the received output image into data using an optical character recognition/reader (OCR)) or the like ((3) in FIG. 26). When the user, such as the system administrator, confirms the determination result indicated in the determination image at the time of data conversion, the user can convert the document image determined as authentic into data as authorized data and store the data. With this configuration, it is possible to prevent information that is not authentic from being mixed into medical information handled as big data.

As described above, the image reading device 10 described in any one of the first to fourth embodiments can be used in the medical information management system 30. With this configuration, while an image serving as evidence of medical data is generated, the authenticity of the medical data is determined, and when it is determined that the medical data is authentic, the medical data can be converted into data as authorized data and stored.

While the processing circuit 340 is included in the image reading device 10 in the above description, the processing circuit 340 may be provided outside the image reading device 10. For example, the processing circuit 340 may be communicably connected to the image forming apparatus body 404 or an external device.

Thus, the medical information management system 30 may include the image reading device 10 including the processing circuit 340, and the server 20; or the medical information management system 30 may include the image reading device 10 not including the processing circuit 340, an external device including the processing circuit 340, and the server 20.

Although some embodiments of the present disclosure have been described above, the above-described embodiments are presented as examples and are not intended to limit the scope of the present disclosure. The above-described novel embodiments can be implemented in other various forms, and various omissions, replacements, and changes can be made without departing from the scope of the present disclosure. Such novel embodiments and variations thereof are included in the scope and gist of the present disclosure and are included in the scope of the appended claims and the equivalent scope thereof. Further, configurations in different embodiments and modifications may be combined as appropriate.

Each function of the embodiments described above can be implemented by one processing circuit or multiple processing circuits. The term "processing circuit" or "processing circuitry," as used herein, includes a processor programmed to implement each function by software, such as a processor implemented by an electronic circuit, and devices designed to implement the functions described above, such as an application-specific integrated circuit (ASIC), a digital signal processor (DSP), a field-programmable gate array (FPGA), and existing circuit modules.

A description is given below of some aspects of the present disclosure.

According to Aspect 1, an image processor includes a determination unit that determines authenticity of a document based on a document image obtained by reading the document; and an image generation unit that generates an output image including the document image and a determination image indicating a determination result from the determination unit, the determination image being arranged outside the document image.

According to Aspect 2, the image processor of Aspect 1 further includes a size adjustment unit that adjusts a size of the document image included in the output image based on a size of the document image and a size of the output image.

According to Aspect 3, in the image processor of Aspect 1 or Aspect 2, the document image includes a first image obtained by reading a first surface of the document and a second image obtained by reading a second surface of the document different from the first surface.

According to Aspect 4, in the image processor of any one of Aspect 1 to Aspect 3, the determination image includes an image indicating a reading situation of the document image.

According to Aspect 5, in the image processor of any one of Aspect 1 to Aspect 4, the document image includes a visible image obtained by reading the document with a first sensor having sensitivity to light in a visible wavelength range and an invisible image obtained by reading the document with a second sensor having sensitivity to light in an invisible wavelength range.

According to Aspect 6, in the image processor of any one of Aspect 1 to Aspect 5, the document image includes a first visible image obtained by reading a first surface of the document with a first sensor having sensitivity to light in a visible wavelength range, a first invisible image obtained by reading the first surface of the document with a second sensor having sensitivity to light in an invisible wavelength range, a second visible image obtained by reading a second surface of the document with the first sensor having the sensitivity to the light in the visible wavelength range, and a second invisible image obtained by reading the second surface of the document with the second sensor having the sensitivity to the light in the invisible wavelength range; the image generation unit generates a first output image including the first visible image, the first invisible image, and a first determination image indicating a determination result of the first surface of the document from the determination unit, the first determination image being arranged outside the first visible image and the first invisible image; and the image generation unit generates a second output image including the second visible image, the second invisible image, and a second determination image indicating a determination result of the second surface of the document from the determination unit, the second determination image being arranged outside the second visible image and the second invisible image.

According to Aspect 7, in the image processor of any one of Aspect 1 to Aspect 5, the document image includes a first visible image obtained by reading a first surface of the document with a first sensor having sensitivity to light in a visible wavelength range, a first invisible image obtained by reading the first surface of the document with a second sensor having sensitivity to light in an invisible wavelength range, a second visible image obtained by reading a second surface of the document with the first sensor having the sensitivity to the light in the visible wavelength range, and a second invisible image obtained by reading the second surface of the document with the second sensor having the sensitivity to the light in the invisible wavelength range; the image generation unit generates an output image including the first visible image, the first invisible image, the second visible image, the second invisible image, a first determination image indicating a determination result of the first surface of the document from the determination unit, and a second determination image indicating a determination result of the second surface of the document from the determination unit, the first determination image and the second determination image being arranged outside the first visible image, the first invisible image, the second visible image, and the second invisible image.

According to Aspect 8, the image processor of any one of Aspect 1 to Aspect 7 further includes a display unit that causes the determination result from the determination unit to be displayed.

According to Aspect 9, in the image processor of Aspect 8, the display unit further display a graphical representation for receiving selection of a character size in the determination image.

According to Aspect 10, in the image processor of Aspect 8, the display unit further displays, on the display screen, a graphical representation for receiving selection of whether to output the output image.

According to Aspect 11, in the image processor of Aspect 8, the display unit further displays, on the display screen, a graphical representation for receiving selection of a type of the document.

According to Aspect 12, in the image processor of any one of Aspect 1 to Aspect 11, the determination image includes an image indicating a type of the document.

According to Aspect 13, in the image processor of any one of Aspect 1 to Aspect 12, the determination image includes an image indicating authenticity of one area or a plurality of areas of the document.

According to Aspect 14, an image reading device that reads a document includes the image processor of any one of Aspect 1 to Aspect 13.

According to Aspect 15, an image forming apparatus includes an image reading device that reads a document; the image processor of any one of Aspect 1 to Aspect 13; and an image forming device that forms an image on a medium based on an image read by the image reading device.

According to Aspect 16, in the image forming apparatus of Aspect 15, the image forming device forms the document image and the determination image on one surface or a plurality of surfaces of the medium, and the determination image is formed while being arranged outside the document image.

According to Aspect 17, a medical information management system includes an image reading device that reads a document; the image processor of any one of Aspect 1 to Aspect 13; and a server that converts a document image obtained by reading a document including medical information by the image reading device into data to manage the document image.

According to Aspect 18, an image processing method executed by an image processor includes determining authenticity of a document based on a document image obtained by reading the document; and generating an output image including the document image and a determination image indicating a determination result in the determining, the determination image being arranged outside the document image.

According to Aspect 19, a program that causes a computer to function as means, the means including determination means that determines authenticity of a document based on a document image obtained by reading the document; and image generation means that generates an output image including the document image and a determination image indicating a determination result from the determination means, the determination image being arranged outside the document image.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processor (340) comprising:
a determination unit (343) configured to determine authenticity of a document based on a document image obtained by reading the document, to generate a determination result of authenticity of the document; and
an image generation unit (344) configured to generate an output image including the document image and a determination image indicating the determination result such that the determination image is arranged outside the document image.

2. The image processor (340) according to claim 1, further comprising a size adjustment unit (342) configured to adjust a size of the document image included in the output image based on information on the size of the document image and a size of the output image.

3. The image processor (340) according to claim 1 or 2,
wherein the document image includes a first image obtained by reading a first surface of the document, and a second image obtained by reading a second surface of the document different from the first surface.

4. The image processor (340) according to any one of claims 1 to 3,
wherein the determination image includes an image indicating a situation in which the document is read to obtain the document image.

5. The image processor (340) according to any one of claims 1 to 4,
wherein the document image includes:
a visible image obtained by reading the document with a first sensor (321) having sensitivity to light in a visible wavelength range; and
an invisible image obtained by reading the document with a second sensor having sensitivity to light in an invisible wavelength range.

6. The image processor (340) according to any one of claims 1 to 5,
wherein the determination unit (343) is configured to determine authenticity of a first surface and a second surface of the document,
wherein the document image includes:
a first visible image obtained by reading the first surface of the document with a first sensor (321) having sensitivity to light in a visible wavelength range;
a first invisible image obtained by reading the first surface of the document with a second sensor (322) having sensitivity to light in an invisible wavelength range;
a second visible image obtained by reading the second surface of the document with the first sensor (321); and
a second invisible image obtained by reading the second surface of the document with the second sensor (322), and
wherein the output image includes:
a first output image including the first visible image, the first invisible image, and a first determination image indicating a determination result of authenticity of the first surface of the document, the first determination image being arranged outside the first visible image and the first invisible image; and
a second output image including the second visible image, the second invisible image, and a second determination image indicating a determination result of authenticity of the second surface of the document, the second determination image being arranged outside the second visible image and the second invisible image.

7. The image processor (340) according to any one of claims 1 to 5,
wherein the determination unit (343) is configured to determine authenticity of a first surface and a second surface of the document,
wherein the document image includes:
a first visible image obtained by reading the first surface of the document with a first sensor (321) having sensitivity to light in a visible wavelength range;
a first invisible image obtained by reading the first surface of the document with a second sensor (322) having sensitivity to light in an invisible wavelength range;
a second visible image obtained by reading the second surface of the document with the first sensor (321); and
a second invisible image obtained by reading the second surface of the document with the second sensor (322),
wherein the output image includes the first visible image, the first invisible image, the second visible image, the second invisible image, a first determination image indicating a determination result of authenticity of the first surface of the document, and a second determination image indicating a determination result of authenticity of the second surface of the document, and
wherein the first determination image and the second determination image are arranged outside the first visible image, the first invisible image, the second visible image, and the second invisible image.

8. The image processor (340) according to any one of claims 1 to 7,
wherein the determination image includes an image indicating a type of the document.

9. The image processor (340) according to any one of claims 1 to 8,
wherein the determination image includes an image indicating authenticity of one or more areas of the document.

10. An image reading device (10) configured to read a document, the device comprising:
a scanner (100) configured to read a document; and
the image processor (340) according to any one of claims 1 to 9.

11. An image forming apparatus (400) comprising:
an image reading device (10) configured to read a document;
the image processor (340) according to any one of claims 1 to 9; and
an image forming device (404) configured to form an image on a medium based on the document image read by the image reading device (10).

12. The image forming apparatus (400) according to claim 11,
wherein the image forming device (404) is configured to form the document image and the determination image on one surface or over both surfaces of the medium, and
wherein the determination image is arranged outside the document image.

13. A medical information management system (30) comprising:
an image reading device (10) configured to read a document;
the image processor (340) according to any one of claims 1 to 9; and
a server (20) configured to convert the document image obtained by reading the document including medical information by the image reading device (10) into data, and store the document image.

14. An image processing method executed by an image processor (340), the method comprising:
determining (S11; S31; S40, S41, S42) authenticity of a document based on a document image obtained by reading the document;
generating (S11) a determination result of authenticity of the document; and
generating (S13; S36) an output image including the document image and a determination image indicating the determination result such that the determination image is arranged outside the document image.

15. A carrier medium carrying computer readable codes which, when executed by a computer system, cause the computer system to carry out the method according to claim 14.
